# EUROPÄISCHE PATENTANMELDUNG

(11) **EP 1 876 422 A1**
(43) Veröffentlichungstag der Anmeldung: **09.01.2008**
(21) Anmeldenummer: 06013925.0
(22) Anmeldetag: 05.07.2006
(51) Int. Cl.: G01D 5/14, G01D 5/16, G01D 5/246, G01D 5/245

(54) **Vorrichtung zur Erfassung von rotatorischen und translatorischen Bewegungen**

(71) Anmelder: Carl Freudenberg KG, 69469 Weinheim (DE)
(72) Erfinder: Klebes, Tobias, 67308 Biedesheim (DE); Mutterer, Heinz, 76532 Baden-Baden (DE)

(57) **Zusammenfassung**

Eine Vorrichtung zur Erfassung und Übermittlung von Winkelinformationen, umfassend ein rotierbares Geberrad (1), welchem signalgebende Elemente (2) zugeordnet sind, wobei die von den Elementen (2) ausgesandten Signale von einem Sensor (3) erfassbar sind, um Verdrehwinkel und/oder die Winkelgeschwindigkeit des Geberrads (1) zu ermitteln, ist im Hinblick auf die Aufgabe, mit möglichst wenig Bauteilen eine Erfassung der translatorischen und rotatorischen Bewegungen des Geberrads zu realisieren, dadurch gekennzeichnet, dass die Elemente (2) signalgebende Mittel (4, 5) aufweisen, durch welche eine der rotierenden Bewegung des Geberrads (1) überlagerte translatorische Bewegung durch den Sensor (3) erfassbar ist.

## Beschreibung

### Technisches Gebiet

Die Erfindung betrifft eine Vorrichtung zur Erfassung und Übermittlung von Winkelinformationen, umfassend ein rotierbares Geberrad, welchem signalgebende Elemente zugeordnet sind, wobei die von den Elementen ausgesandten Signale von einem Sensor erfassbar sind, um Verdrehwinkel und/oder die Winkelgeschwindigkeit des Geberrads zu ermitteln. Die Erfindung betrifft des Weiteren ein Fahrzeuggetriebe, welches eine solche Vorrichtung umfasst.

### Stand der Technik

Vorrichtungen der eingangs genannten Art sind aus dem Stand der Technik bereits bekannt. Insbesondere finden die gattungsbildenden Vorrichtungen Verwendung in Drehzahlmesssystemen von Kraftfahrzeugen.

In Drehzahlgebersystemen wird ein Geberrad verwendet, weiches häufig als Multipolencoder ausgestaltet ist. Zur Erfassung der Drehzahl wird ein Drehzahlsensor verwendet, der Verdrehwinkel und Winkelgeschwindigkeiten auf Grund der Abfolge von Signalen des Geberrads ermitteln kann. Im Betrieb führt ein Geberrad jedoch nicht nur eine rotatorische Bewegung aus, sondern häufig auch eine translatorische, insbesondere axiale, Bewegung. Diese translatorische Bewegung kann durch Spiel oder Verschleiß bedingt sein.

Aus dem Stand der Technik ist es bekannt, zur Erfassung der translatorischen Bewegung einen Näherungsschalter oder ein Positionserfassungssystem zu verwenden. Ein solcher Aufbau erfordert jedoch eine Vielzahl von Bauteilen und aufwändige Abstimmung der Bauteile aufeinander. Dies erfordert sowohl in logistischer Hinsicht als auch bei der Montage einen hohen Aufwand, der sich in erheblichen Kosten niederschlägt.

### Darstellung der Erfindung

Der vorliegenden Erfindung liegt daher die Aufgabe zugrunde, Vorrichtungen der eingangs genannten Art derart auszugestalten und weiterzubilden, dass eine Erfassung von rotatorischen und translatorischen Bewegungen mit möglichst wenig Bauteilen realisierbar ist.

Die zuvor aufgezeigte Aufgabe ist durch eine Vorrichtung mit den Merkmalen des Patentanspruchs 1 gelöst. Danach ist eine Vorrichtung der eingangs genannten Art dadurch gekennzeichnet, dass die Elemente signalgebende Mittel aufweisen, durch welche eine der rotierenden Bewegung des Geberrads überlagerte translatorische Bewegung durch den Sensor erfassbar ist.

In erfindungsgemäßer Weise ist erkannt worden, dass auf ein ositionserfassungssystem bzw. einen Näherungsschalter als weiteres Bauteil verzichtet werden kann, wenn die signalgebenden Elemente Elemente aufweisen, die in ganz spezieller Art ausgestaltet sind. Die signalgebenden Elemente, welche die Erfassung einer translatorischen Bewegung erlauben, sind derart ausgestaltet, dass mit einem einzigen Sensor sowohl eine rotatorische Bewegung als auch eine translatorische Bewegung erfassbar ist. Ein Teil der signalgebenden Elemente ist für die Übertragung und Ermittlung der rotatorischen Bewegung vorgesehen, wobei einzelne Elemente aufgrund ihrer Ausgestaltung erlauben, die translatorische Bewegung des Geberrads simultan zu erfassen. Insoweit wird bei der erfindungsgemäßen Vorrichtung nur von einem Sensor und einem Geberrad Gebrauch gemacht, um zwei Bewegungstypen, nämlich die rotatorische Bewegung und die translatorische Bewegung zu erfassen. Folglich ist die eingangs genannte Aufgabe gelöst.

Die Mittel könnten mindestens ein Element umfassen, welches sich von den übrigen Elementen unterscheidet. Durch diese konkrete Ausgestaltung ist eine Änderung einer bereits erfassten Winkelinformation und damit eine translatorische Bewegung des Geberrads erfassbar.

Die Elemente könnten als magnetische Pole ausgestaltet sein. Die Ausgestaltung der Elemente als magnetische Pole erlaubt eine sehr präzise Erfassung der Winkelinformationen, da magnetische Pole in nahezu beliebiger Ausdehnung herstellbar sind. Insoweit kann durch die Verwendung magnetischer Pole eine hochaufgelöste Erfassung von Winkelinformationen erfolgen.

Vor diesem Hintergrund ist denkbar, dass die signalgebenden Elemente mechanische Mittel, beispielsweise die Zähne eines Zahnrades, umfassen. Bei dieser konkreten Ausgestaltung könnte eine Vielzahl der Zähne regelmäßig und eine Minderzahl der Zähne unregelmäßig ausgestaltet sein, um die rotatorischen und translatorischen Bewegungen simultan zu erfassen. Des Weiteren ist vorstellbar, dass die signalgebenden Elemente mit einem optischen Sensor korrespondieren. Ganz konkret ist hierbei denkbar, dass die signalgebenden Elemente als Barcodes ausgestaltet sind, welche von einem Laser erfasst werden, Diese konkrete Ausgestaltung weist ebenfalls den Vorteil einer hochaufgelösten Erfassung von Winkelinformationen auf,

Die magnetischen Pole könnten auf dem Außenumfang des Geberrads angeordnet sein. Diese konkrete Ausgestaltung erlaubt eine problemlose Montage des Geberrads, da die magnetischen Pole dem Geberrad ortsfest zugeordnet sind. Vor diesem Hintergrund ist auch denkbar, dass die magnetischen Pole einer Gehäusewandung zugeordnet sind, welche das Geberrad umfänglich umgibt. Bei dieser konkreten Ausgestaltung müsste der Sensor dem Geberrad zugeordnet sein, wobei der Sensor bei einer Rotationsbewegung des Geberrads die magnetischen Pole auf der Gehäusewandung passiert. Durch die Positionierung der magnetischen Pole dem Außenumfang des Geberrads sind die magnetischen Signale der Pole problemlos von einem Sensor erfassbar, der in radialer Richtung dem Außenumfang des Geberrads gegenüber liegt.

Die Mittel könnten als magnetische Pole ausgestaltet sein, die sich in axialer Richtung zumindest bereichsweise in ihrer Ausdehnung verändern. Diese konkrete Ausgestaltung erlaubt die direkte Erfassung einer translatorischen Bewegung des Geberrads durch einen Sensor, da sich das magnetische Signal in Abhängigkeit von der Breite der magnetischen Pole deutlich ändert. Ganz konkret ist hier denkbar, dass eine Vielzahl magnetischer Pole eine regelmäßige Ausdehnung aufweist, um nämlich hochaufgelöst die Winkelgeschwindigkeit und die Verdrehwinkel zu erfassen, und eine Minderzahl magnetischer Pole sich in ihrer Ausdehnung verändert, um die translatorische Bewegung des Geberrads zu erfassen.

Vor diesem Hintergrund ist denkbar, dass zwei benachbarte magnetische Pole sich in axialer Richtung zumindest bereichsweise derart kontinuierlich in ihrer Ausdehnung verändern, dass die Summe ihrer Breiten konstant ist. Hierdurch ist gewährleistet, dass das Magnetfeld der regelmäßig angeordneten magnetischen Pole nur geringfügig gestört wird, jedoch zugleich ein deutliches Signal aufgrund der unsymmetrischen Ausdehnung zweier benachbarter magnetischer Pole erzeugt wird. Hierdurch ist eine zuverlässige Erfassung einer translatorischen Bewegung realisierbar. Ganz konkret ist hierbei denkbar, dass zwei benachbarte magnetische Pole sich in axialer Richtung kontinuierlich in ihrer Ausdehnung verändern, nämlich längs einer Trennlinie zwischen den beiden magnetischen Polen.

Zwei benachbarte magnetische Pole könnten sich in axialer Richtung zumindest bereichsweise derart stufenweise in ihrer Ausdehnung verändern, dass die Summe ihrer Breiten konstant ist. Die Ausbildung einer stufenweise Veränderung der Ausdehnung liefert ein besonders deutliches Signal, da durch eine stufenweise Änderung des Signals ein starker Intensitätsanstieg oderabstieg eines Signals realisierbar ist. Vor diesem Hintergrund ist denkbar, dass einer stufenweisen Änderung der Ausdehnung eine kontinuierliche Ausdehnung überlagert ist, um die Auflösung der Erfassung der translatorischen Bewegung zu erhöhen. Denkbar ist auch, dass eine Vielzahl von Stufen vorgesehen ist, um die Auflösung der Erfassung der translatorischen Bewegung zu erhöhen.

Drei benachbarte magnetische Pole könnten sich in axialer Richtung zumindest bereichsweise derart stufenweise in ihrer Ausdehnung verändern, dass die Summe ihrer Breiten konstant ist. Diese konkrete Ausgestaltung erlaubt die Verwendung eines Differential-Hall-Sensors zur Erfassung der translatorischen Bewegung. Durch die Verwendung des Differenial-Hall-Sensors und die konkrete Ausgestaltung der drei benachbarten magnetischen Pole lässt sich die translatorische Bewegung besonders genau erfassen, da der Sensor zwei sich ändernde Signale erfasst und aus beiden gemeinsam die tatsächliche Position des Geberrades ermittelt

Der Sensor könnte als Hall-Sensor, Differential-Hall-Sensor, MR-(magneto-resistiver)-Sensor, GMR-(giant-magneto-resistiver)-Sensor oder induktiver Sensor ausgestaltet sein. All diesen Sensoren ist gemeinsam, dass sie die Änderung eines Magnetfelds erfassen können. Insoweit eignen sie sich in besonderer Weise für die Verwendung zusammen mit einem Geberrad, dem magnetische Pole zugeordnet sind.

Der Sensor könnte der Außenumfangsfläche des Geberrads in radialer Richtung unmittelbar gegenüber liegen. Diese konkrete Ausgestaltung bewirkt, dass die Signale der signalgebenden Elemente nicht durch weitere Bauteile verfälscht oder verzerrt werden.

Des Weiteren ist denkbar, dass der Sensor dem Geberrad in axialer Richtung unmittelbar gegenüberliegt. Hierdurch können Taumelbewegungen des Geberrads bzw, einer Welle erfasst werden, wenn sich nämlich die Lage der Drehachse durch translatorische Bewegungen in radialer Richtung ändert,

Die erfindungsgemäße Vorrichtung könnte des Weiteren in einem Fahrzeuggetriebe Verwendung finden. Ganz konkret könnte einer Schaltmuffe die erfindungsgemäße Vorrichtung zugeordnet sein, um bei einem Wechselgetriebe die Schaltposition der Schaltmuffe zu erfassen.

Denkbar ist auch, die erfindungsgemäße Vorrichtung zu verwenden, um die Belagstärke einer Trockenkupplung oder einer Bremsscheibe zu erfassen. Hierdurch könnte ein Fahrzeughalter bzw. Fahrer nach Erreichen einer bestimmten Verschleißgrenze auf einen bevorstehenden Austausch der Kupplungsscheibe oder Bremsscheibe hingewiesen werden. Schließlich ist auch denkbar, die Verschleißdetektion eines Kurbelwellen-Axiallagers durch die erfindungsgemäße Vorrichtung zu realisieren. Ganz allgemein kann durch die Erfassung der translatorischen Bewegung eines Geberrades auf den Betriebszustand oder den Verschleiß eines Systems geschlossen werden.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung bevorzugter Ausführungsbeispiele der Erfindung, anhand der Zeichnung zu verweisen. In Verbindung mit der Erläuterung bevorzugter Ausführungsbeispiele der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- ig. 1: ein Geberrad, welches auf einer Welle angeordnet ist und magnetische Pole aufweist,
- ig. 2: vier konkrete Ausgestaltungen benachbarter magnetischer Pole und
- ig. 3: ein Fahrzeuggetriebe in zwei verschiedenen Schaltpositionen, bei dem einer Schaltmuffe ein Geberrad zugeordnet ist.

### Ausführung der Erfindung

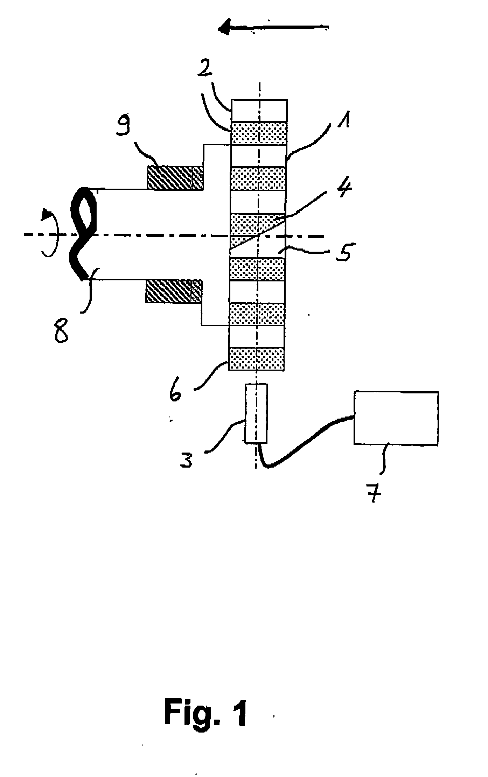

Fig. 1 zeigt eine Vorrichtung zur Erfassung und Übermittlung von Winkelinformationen in schematischer Ansicht Diese umfasst ein rotierbares Geberrad 1, welchem signalgebende Elemente 2 zugeordnet sind. Die von den Elementen 2 ausgesandten Signale werden von einem Sensor 3 erfasst, um Verdrehwinkel und/oder die Winkelgeschwindigkeit 1 des Geberrads 1 zu ermitteln.

Die Elemente 2 weisen signalgebende Mittel 4, 5 auf, durch welche eine der rotierenden Bewegung des Geberrads 1 überlagerte translatorische Bewegung durch den Sensor 3 erfassbar ist. Die Mittel 4, 5 umfassen mindestens ein Element 4, 5, welches sich von den übrigen Elementen 2 unterscheidet. Ganz konkret zeigt das Geberrad 1 zwei Mittel 4, 5, welche sich in ihrer Ausdehnung von den übrigen Elementen 2 unterscheiden.

Die Elemente 2, 4, 5 sind als magnetische Pole ausgestaltet. Die magnetischen Fole 2, 4, 5 sind auf dem Außenumfang 6 des Geberrads angeordnet Der Sensor 3 liegt der Außenumfangsfläche 6 des Geberrads 1 in radialer Richtung gegenüber und kann daher die Signale der magnetischen Pole 2, 4, 5 unverfälscht und unverzerrt empfangen. Dem Sensor 3 ist eine Elektronik 7 nachgeordnet, welche die erfassten Signale des Sensors 3 verarbeitet und an nachgeordnete Systeme wie die Fahrzeugelektronik oder Anzeigeinstrumente weiterleitet. Der Sensor 3 kann als Hall-Sensor, Differential-Hall-Sensor, magneto-resistiver Sensor, Giant-magneto-resistiver Sensor oder induktiver Sensor ausgestaltet sein.

Das Geberrad 1 umgibt konzentrisch eine Welle 8 und eine Lagerschale 9. Die Lagerschale 9 umgibt die Welle 8 ebenfalls konzentrisch. Das Geberrad 1 kann in Pfieilrichtung eine translatorische Bewegung durchführen, welche vom Sensor 3 erfassbar und quantifizierbar ist.

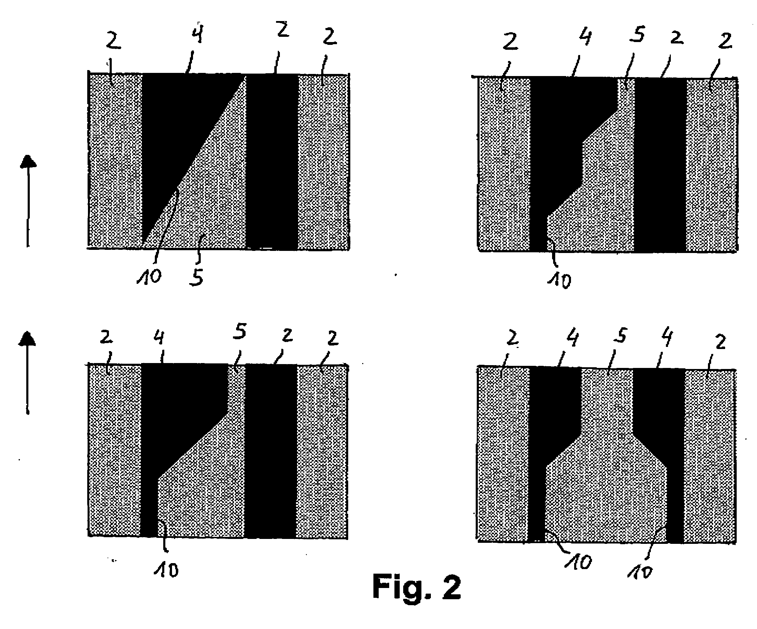

Fig. 2 zeigt benachbarte magnetische Pole 4, 5, die sich in axialer Richtung zumindest bereichsweise in ihrer Ausdehnung verändern. Oben links in Fig. 2 ist gezeigt, dass zwei benachbarte magnetische Pole 4, 5 sich in axialer Richtung derart kontinuierlich in ihrer Ausdehnung verändern, dass die Summe ihrer Breiten konstant ist. Die Summe der Breiten der magnetischen Pole 4 und ist stets konstant, wobei die magnetischen Pole 4 und 5 durch eine Trennlinie 10 voneinander getrennt sind. Die axiale Richtung wird durch die schematisch angegebenen Pfeile repräsentiert. Die magnetischen Pole 4 und 5 sind von regelmäßig ausgestalteten magnetischen Polen 2 umgeben. Unten links in Fig. sind zwei benachbarte magnetische Pole 4 und 5 gezeigt, welche sich in axialer Richtung zumindest bereichsweise derart stufenweise in ihrer Ausdehnung verändern, dass die Summe ihrer Breiten konstant ist. Unten links und oben rechts in Fig. 2 sind die Ausbildungen einer unterschiedlichen Anzahl von Stufen gezeigt.

Unten rechts in Fig. 2 sind drei benachbarte magnetische Pole 4, 5 gezeigt, welche sich in axialer Richtung zumindest bereichsweise derart stufenweise in ihrer Ausdehnung verändern, dass die Summe ihrer Breiten konstant ist. Die in Fig. 2 unten rechts beschriebene konkrete Ausgestaltung der benachbarten magnetischen Pole 4 und 5 ist besonders geeignet für die Verwendung eines Differential-Hall-Sensors, da dieser von den Sensoren 4 und 5 stets zwei sich verändernde Signale bei einer translatorischen Bewegung erhält.

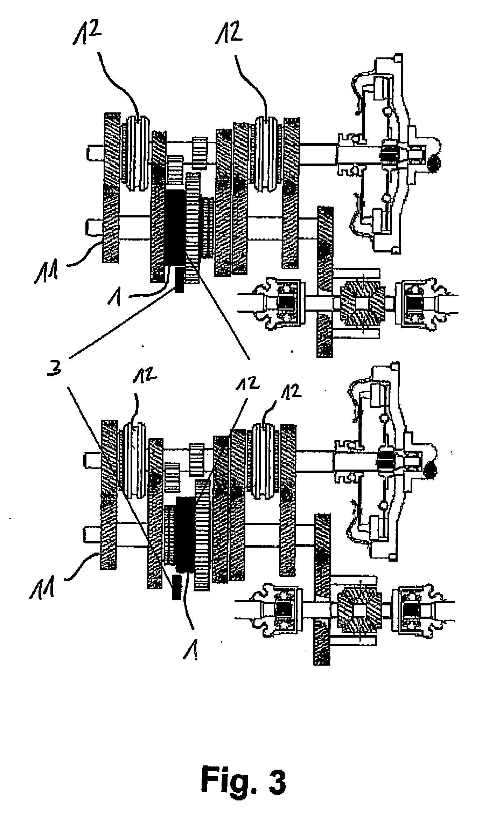

Fig. 3 zeigt in schematischer Ansicht ein Fahrzeuggetriebe 11 in zwei Schaltpositionen, welchem eine Vorrichtung der hier beschriebenen Art zugeordnet ist. Der obere Teil von Fig. 3 zeigt eine erste, der untere Teil eine zweite Schaltposition. Ganz konkret ist einer Schaltmuffe 12 ein Geberrad 1 zugeordnet, welchem in radialer Richtung ein Sensor 3 gegenüber liegt. Durch die Anordnung der erfindungsgemäßen Vorrichtung in einem Fahrzeuggetriebe ist die Schaltposition der Schaltmuffe 12 erfassbar. Allen oder mehreren der drei gezeigten Schaltmuffen 12 können Geberräder zugeordnet sein, um die Schaltpositionen des Fahrzeuggetriebes genauer zu erfassen.

Abschließend sei ganz besonders hervorgehoben, dass die zuvor rein willkürlich ausgewählten Ausführungsbeispiele lediglich zur Erörterung der erfindungsgemäßen Lehre dienen, diese jedoch nicht auf diese Ausführungsbeispiele einschränken.

## Patentansprüche

1. Vorrichtung zur Erfassung und Übermittlung von Winkelinformationen, umfassend ein rotierbares Geberrad (1), welchem signalgebende Elemente (2) zugeordnet sind, wobei die von den Elementen (2) ausgesandten Signale von einem Sensor (3) erfassbar sind, um Verdrehwinkel und/oder die Winkelgeschwindigkeit des Geberrads (1) zu ermitteln,
**dadurch gekennzeichnet, dass** die Elemente (2) signalgebende Mittel (4, 5) aufweisen, durch welche eine der rotierenden Bewegung des Geberrads (1) überlagerte translatorische Bewegung durch den Sensor (3) erfassbar ist.

2. Vorrichtung nach Anspruch 1, **dadurch gekennzeichnet, dass** die Mittel (4, 5) mindestens ein Element (4, 5) umfassen, welches sich von den übrigen Elementen (2) unterscheidet

3. Vorrichtung nach Anspruch 1 oder 2, **dadurch gekennzeichnet, dass** die Elemente (2, 4, 5) als magnetische Pole ausgestaltet sind.

4. Vorrichtung nach Anspruch 3, **dadurch gekennzeichnet, dass** die magnetischen Pole (2, 4, 5) auf dem Außenumfang (6) des Geberrads (1) angeordnet sind.

5. Vorrichtung nach einem der Ansprüche 1 bis 4, **dadurch gekennzeichnet, dass** die Mittel (4, 5) als magnetische Pole (4, 5) ausgestaltet sind, die sich in axialer Richtung zumindest bereichsweise in ihrer Ausdehnung verändern.

6. Vorrichtung nach Anspruch 5, **dadurch gekennzeichnet, dass** zwei benachbarte magnetische Pole (4, 5) sich in axialer Richtung zumindest bereichsweise derart kontinuierlich in ihrer Ausdehnung verändern, dass die Summe ihrer Breiten konstant ist.

7. Vorrichtung nach Anspruch 5 oder 6, **dadurch gekennzeichnet, dass** zwei benachbarte magnetische Pole (4, 5) sich in axialer Richtung zumindest bereichsweise derart stufenweise in ihrer Ausdehnung verändern, dass die Summe ihrer Breiten konstant ist.

8. Vorrichtung nach Anspruch 5, **dadurch gekennzeichnet, dass** drei benachbarte magnetische Pole (4, 5) sich in axialer Richtung zumindest bereichsweise derart stufenweise in ihrer Ausdehnung verändern, dass die Summe ihrer Breiten konstant ist.

9. Vorrichtung nach einem der Ansprüche 1 bis 8, **dadurch gekennzeichnet, dass** der Sensor (3) als Hallsensor, Differenzen-Hall-Sensor, MR-(magneto-resistiven) - Sensor, GMR - (Giant magneto-resistiver) - Sensor oder induktiver Sensor ausgestaltet ist.

10. Vorrichtung nach einem der Ansprüche 1 bis 9. **dadurch gekennzeichnet, dass** der Sensor (3) der Außenumfangsfläche (6) des Geberrads (1) in radialer oder in axialer Richtung gegenüberliegt.

11. Fahrzeuggetriebe, umfassend eine Schaltmuffe, der eine Vorrichtung nach einem der voranstehenden Ansprüche zugeordnet ist.
